# EUROPEAN PATENT SPECIFICATION

(11) **EP 1 487 278 B1**
(45) Date of publication and mention of the grant of the patent: **24.10.2007**
(21) Application number: 03744973.3
(22) Date of filing: 21.03.2003
(51) Int. Cl.: A22C 17/02, B26D 7/01, A22C 21/00

(54) **A METHOD AND DEVICE FOR CUTTING OBJECTS INTO FIXED PORTIONS**
VERFAHREN UND VORRICHTUNG ZUM SCHNEIDEN VON GEGENSTÄNDEN IN GLEICHE TEILE
PROCEDE ET DISPOSITIF DE DECOUPE D'OBJETS EN PORTIONS DEFINIES

(30) Priority: 21.03.2002 IS 632102
(43) Date of publication of application: 22.12.2004
(73) Proprietor: Marel HF., 210 Gardabaer (IS)
(72) Inventor: SVERRISSON, Ragnar, IS-101 Reykjavik (IS); HALLVARDSSON, Kristjan, IS-200 Kopavogur (IS)
(74) Representative: Hardarson, Gunnar Örn
(86) International application number: PCT/IS2003/000014
(87) International publication number: WO 2003/079801

(56) References cited:
- WO-A-92/19110
- DD-A- 296 832
- DE-A- 4 333 534
- GB-A- 2 304 025

## Description

### Field of the invention

The present invention relates to a method and a device for cutting objects into fixed portions.

### Background

It is well known that raw materials are sold in predetermined portions, typically on the bases of weight and/or the shape of the raw material. For some products the weight and the shape of a single product is of crucial importance. This is for example the case when the product is a chicken breast, especially when the final product is as an example a chicken sandwich or chicken burger. This industry is growing extremely fast, and the demand for chicken breasts with a fixed shape and weight increases. Mainly three methods are used when processing chicken breasts for this purpose:
a) Delivering the product directly to the customer without processing it further. Obviously this has the disadvantage that the pieces have different shapes as well as weight, as only a little part of the chicken breasts have the "right" weight and shape that fulfils the need set forth by the customer.
b) Manual processing of the chicken breast, which comprises cutting each peace in a fixed portion into a predetermined shape. This is however inaccurate method and requires a lot of manpower, which is expensive, as well as the shape of the final product has the tendency to be unnatural.
c) Automation processing, where the processing is based on two steps:
   i) providing a horizontal cut, thereby ensuring a right thickness of the product, and subsequently
   ii) providing a vertical cut so that side parts of the breast are removed, by means of moving a cutting means, which is a high pressurised water jet, in a predefined path, defining thereby in-plane shape of the chicken breast.

The problem with this latter method is how expensive it is, manpower demanding and requires very extensive mechanical maintenance as well as know how. Also, the shape of the final product is not natural.

GB2304025A discloses a method and an apparatus for trimming meat e.g. chicken fillets to produce portions substantially of the same weight. The meat is placed in an open cavity which is mounted on a conveyor. The meat is then urged into the cavity and skewers are driven into the meat to secure it in place. The conveyor then delivers the meat to a trimming station where a cutting blade trims away the exposed surface of the meat and the meat trimming are collected. The trimmed meat is released from the receptacle at a release station by the withdrawal of the skewers.

Accordingly, there is a urgent need for a low cost method that requires limited manpower and know how, and wherein the shape of the final product is as natural in shape as possible.

### Description of the invention

It is an object of the present invention to provide a simple, cost effective device and method for cutting objects such as chicken breast into portions with a fixed shape and weight where the natural shape of the object is conserved.

According to the first aspect the invention relates to a device for cutting objects into fixed portion size with a predetermined shape comprising:
- a plurality of moulds mounted on a conveying means, wherein upper part of said conveying means forms a processing part, and lower half of said conveying means forms an idle part,
- means for feeding said processing part with objects to be processed, wherein said objects are situated in said moulds,
   means for cutting said objects into an object part corresponding to the mould, and a supplementary part corresponding to the part of said object extending above the mould positioned adjacent to said processing part, wherein the object part has a fixed portion size,
- means for providing under-pressure in the mould for positioning said objects in a fixed position as they pass the cutting means, and
   means for transferring said mould in a uniform motion during the cutting process, means for removing said supplementary part of said objects mounted to said processing part of said conveyor,
wherein said objects part has a fixed portion size with a predetermined shape corresponding to the shape of the mould and the supplementary part corresponds to the difference between the object size and the portion size of the object.

In one preferred embodiment the mould is an upper part of a housing, said housing additionally comprising a base unit as a bottom part with at least one passage extending through it as an entrance for under pressure. Preferably the mould may be opened and/or closed and/or is replaceable, which simplifies as an example the cleaning procedure or when the portion size is to be changed. An interior between the upper and lower part of the housing is provided as well as at least one channel extending through the mould towards the interior. Therefore, by applying under-pressure the effect will be in the whole interior between the mould and the bottom part of the housing. At least one channel extending through the mould towards the interior ensures therefore that the under pressure is transferred to the mould and situates the object in a fixed position. In this preferred embodiment the base unit is provided with a plurality of supporting means, such as pins extending perpendicular from the base unit towards the upper part of the housing, for supporting the mould (the upper part) and preventing it from collapsing due to the under pressure. In one preferred embodiment the device further comprises means for transferring the mould in a uniform motion during the cutting process, and wherein a cutting blade is positioned adjacent to the surface of the mould is provided adapted to perform a cut parallel to the surface of the mould.

Vacuum pump, air duct or similar means can be used as an under pressure means, wherein a nozzle connected to said under pressure means is preferably positioned adjacent to the at least one passage in the base unit.

In another embodiment the mould is one unit provided with at least one passage extending through it. This passage may be an open channel extending through the mould and perpendicular to the surface of the mould for transferring the under pressure to the surface of the mould. The essential feature in present invention is to provide an under pressure for situating the products in a fixed position and subsequently cut the object as described above.

The under pressure in the moulds may be provided through different implementations, such as by connecting each mould to said means for providing under pressure.

By mounting a plurality of moulds to a conveying unit in a continuous way a productive portioning device apparatus is formed, wherein the objects are cut into fixed portions with a fixed shape while the objects are being transferred in a uniform motion. The upper part of the conveying units may be defined as the processing part, where the objects are processed, and the lower part as the idle part. The cutting means may be a cutting blade, such as a rotating blade, positioned adjacent to the processing part of the conveying means. Other types of cutting means can be used. Accordingly, as the processing part of the conveyer belt is fed with objects to be processed, which may be done manually, and the moving objects are situated in a fixed position in the mould through the under pressure as they pass the cutting blade, they are cut in a manner so that only the part filling the mould remains in the mould and the part of the object extending over the mould is removed. The remaining part in the mould has therefore a fixed weight and shape.

In one embodiment an additional means is provided for situated above the processing part for maintaining the object in a fixed position while it is being cut. This is to prevent a failure in the cutting, which could occur if for example the object does not fully cover the mould, which could cause an air leak to the surface of the mould and therefore reduce the under pressure at the surface of the mould. This additional means may be additional conveying unit with a conveyer belt, where a part the belt is pressed against the upper part of the object while said object is being cut and thereby preventing said leak to the surface of the mould. This is however not an essential part in the present invention. The conveyor unit may as well be without said additional means.

Preferably, a removing board adapted to remove the cut part of the object is mounted to the conveying unit, wherein said removed parts are transferred to a position where further processing is continued. If the removed parts are above minimum weight/size for an additional portion, they may be reprocessed, i.e. the process described here above may be repeated for those parts. The parts that however are under the minimum weight/size for such reprocess are used for other products, such as nuggets.

In a second aspect the present invention relates to a method for cutting objects into fixed portion size with a predetermined shape, said method comprising:
- situating said objects in a mould,
- applying under-pressure in said mould for positioning said object in a fixed position as they pass the cutting means" and
- transferring said mould in a uniform motion during the cutting process,
- cutting said object into an object part and a supplementary part,
- remove said supplementary part of said objects,
wherein said object part has a fixed portion size with a predetermined shape and said supplementary part corresponds to the difference between the object size and the portion size of the object.

Preferably, the cutting is performed parallel to the surface of the mould so that the portion size corresponds to the size of the object that fills out the mould and the portion shape to the shape of the mould. In one embodiment the object is a chicken breast. Other types of products are also possible, such as meat and any types of poultry items.

### Detailed description

In the following the present invention, and in particular preferred embodiments thereof, will be described in greater details in connection with the accompanying drawings in which
Figure 1 shows a mould defining a shape of the object to be cut,
Figure 2 shows a plurality of moulds mounted to a conveying means,
Figure 3 shows a side view of a mould with an object to be cut,
Figure 4 shows the cross section of the base unit of the housing,
Figure 5 shows a cross sectional part of two housings from Fig. 2,
Figure 6 shows a side view of the conveyor unit in Fig. 2, and
Figure 7 shows a front view of the apparatus in Fig. 2 and Fig. 6.

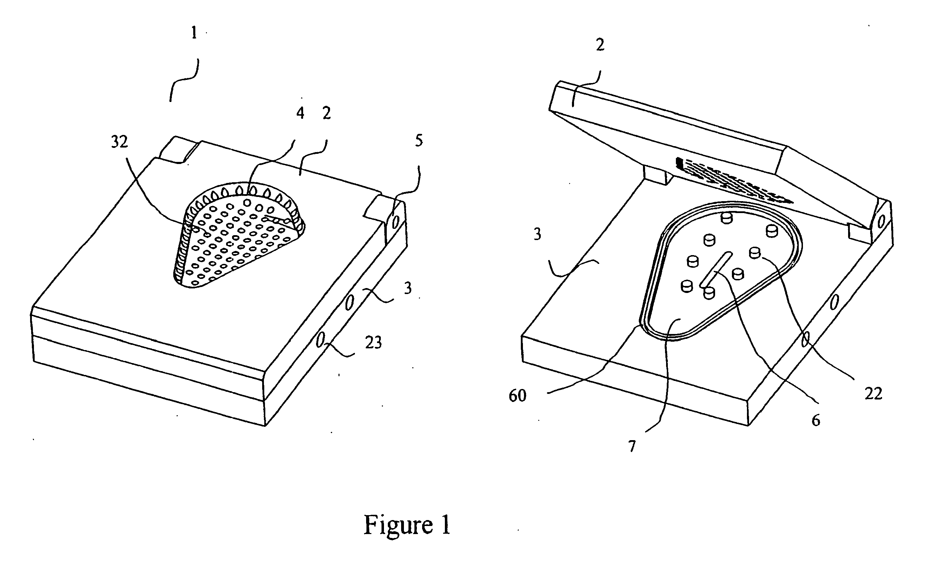

Figure 1 shows a housing 1 with a mould 4, wherein the mould defines the shape of the part of the object to be cut. The object can be different kind of food items, such as chicken breast, turkey breast, meat etc. In a preferred embodiment the housing is divided into two sections. This first section is a base unit 3 with a passage extending through it 6 and a plurality of supporting pins 22 or supporting means, which will be referred to later, and the mould 4 with a plurality of open channels 32 extending through it, said mould defining the shape and size of the portion to be cut. Both the size and the shape of the mould may be varied, depending on the product and the portion to be cut. In this preferred embodiment the mould is mounted to the base unit through a hinge system 5 so that it may be opened, closed or removed. This has the advantage that cleaning of the mould is more effective and the mould can easily be exchanged, if for example the portion to be cut is changed. This two-part form of the housing, i.e. the base unit 3 and the mould 4 is not essential. A one part for of the housing is also possible.

A groove 7, of a similar shape as the mould 4, is formed into the base unit 3, and also a slot 60 or sealing the mould 4 and the base unit 3, wherein a plastic material as an example may be used as a seal material. This is important when a under pressure is provided in preventing an air leak into the interior between the mould 4 and the base unit. When the housing is in a closed position the object is placed in the mould 4, preferably so that the object covers the whole mould. By providing an under-pressure, which can for example be done through vacuum pump, or an air duct the object is in a fixed position and fills out the mould 4. In this position the part of the object to be cut defines a fixed portion of fixed weight. This weight is determined from the mass density multiplied with the volume of the mould, assuming the mass density is constant. In a closed position, the supporting pins 22 act as a supporting means for the mould 4 and prevents it from collapsing due to the under pressure. Between the mould 4 and the base unit 3 is an interior. Therefore, the under-pressure provided through the passage 6 is distributed within this interior and transferred through open channels 32 to the surface of the mould 4, preferably equally, and is not solely focused to the part of the mould that is adjacent to the passage 6 when the housing is in a closed position.

The object can now be cut. The cut is performed parallel to the plane of the housing 1 so that the part of the object extending over the mould 4 is removed and the remaining part of the object is solely the part filling the mould and defined by the space 4. The cut part must not be regarded as a waste. In the case that the object is a chicken breast, the cut part can either be reprocessed if it is above the weight/size of one portion. If not, it may be used for other products such as chicken nuggets as an example.

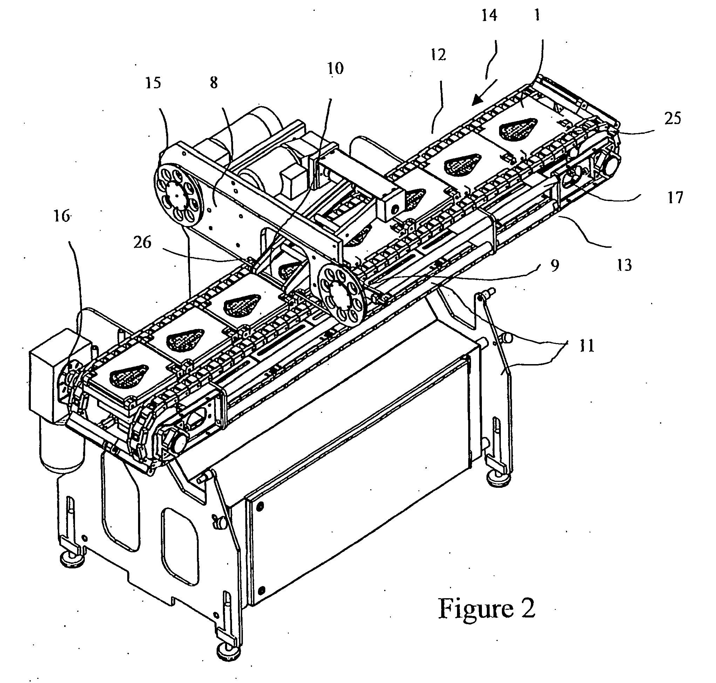

Shown is also engaging means 23, for mounting a plurality of such housing to a conveyor, as shown in Fig. 2.

Figure 2 illustrates one embodiment of a conveyor supported by a frame 11 with a two chains 25 provided with a plurality of pins (not shown), adapted to slide into said engaging means of the housing 1 and therefore mounting the housing between the two chains as shown in Fig.2. Other mounting methods are inherent possible for mounting housing such the one shown in Fig. 1 to a conveyor system.

By mounting a plurality of housings 1 in the way as described above a conveyor unit is defined forming an single endless loop, which may be driven in a revolving manner by a driving unit 16 in a direction indicated by the arrow 14.

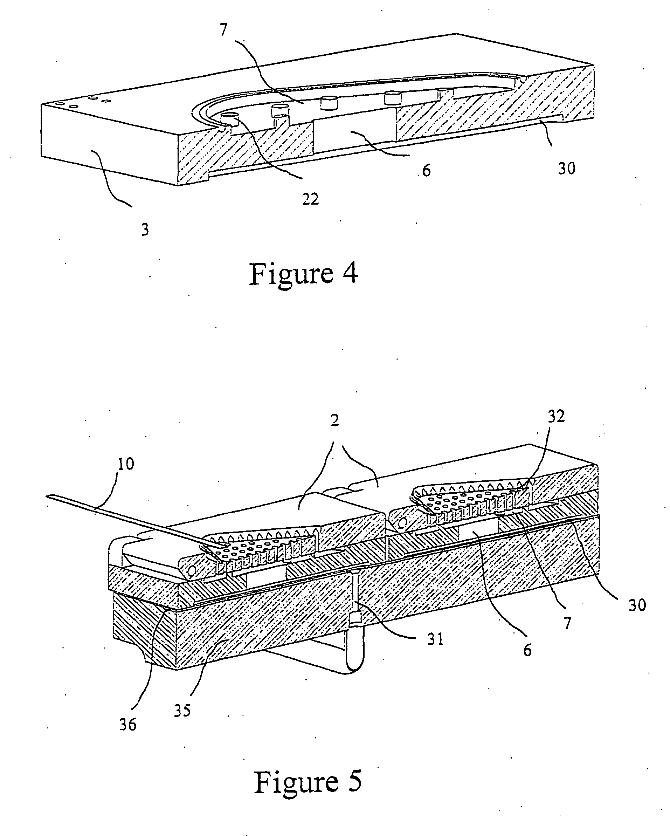

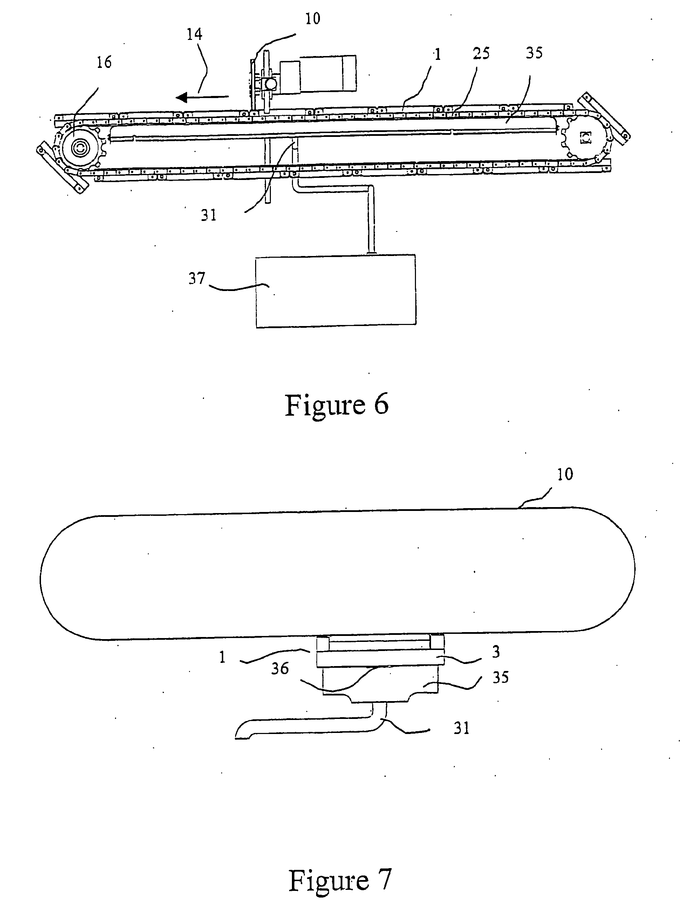

The upper part of the conveyor unit may be defined as a processing part 12, which is the part where the object is situated in the mould 4 and cut, and the lower section part as a idle part 13. Between the processing part 12 and the idle part 13 is nozzle 31 connected to vacuum pump (see Fig. 5), or similar means for obtaining under-pressure in at least one mould. Any other kind of means for providing such under pressure could also be used. The under-pressure is therefore provided in the moulds that are positioned directly above the under pressure means 37(see Fig. 6).

A cutting means 8 is positioned adjacent to the processing part 12, where the under-pressure is high and the objects situated in a fixed position. A rotatable cutting blade 10 is extended between two wheels 9, 15 and positioned adjacent to the plane of the housing 1 and used for cutting the part oft the object extending over the mould. In this embodiment an additional means 26 situated above the processing part may be provided for maintaining the object in a fixed position while it is being cut. This is to prevent a failure in the cutting, which could occur if for example the object does not fully cover the mould 4 so that air leaks to the surface of the mould and reduces therefore the under pressure at the surface of the mould. This may be additional conveying unit (only the supporting frame is shown) with a conveyer belt, where a part the belt is pressed against the upper part of the object while said object is being cut and thereby preventing said leak to the surface of the mould. This is however not an essential part in the present invention. The conveyor unit in Fig. 2 may as well be without said means 26.

The cutting is performed while the objects are moving in a uniform motion in the direction indicated by the arrow 14. The objects passing by the cutting blade are cut in a manner so that only the part filling the mould 4 remains in the mould.

In anther embodiment, the conveyor unit forms an endless loop with a two, or more side by side arranged housings 1, and not a single housing 1 as shown in Fig. 2.

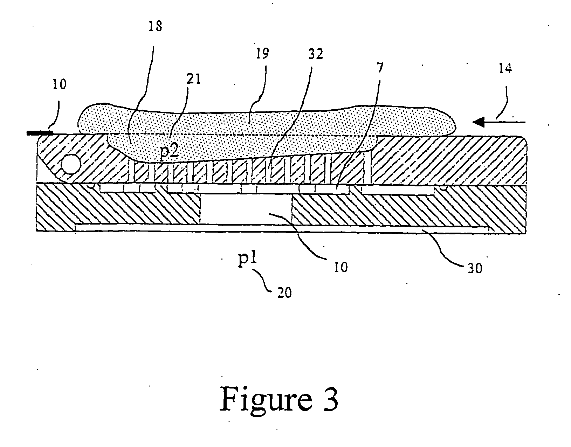

Figure 3 shows a side view of a housing as shown in Fig. 1, with an object, such as chicken breast. The part of the object that defines the fixed portion and shape 18 is the part that fills out the mould 4, and the remaining part of the object 19 is the part that will be removed. Shown is the interior in-between said base unit and said mould. An under-pressure P1 20 (where P1<P2) is provided through the passage 6 and is distributed within said interior so that the whole object will be situated in the mould 4 in a fixed position. By moving the housing 1 in the direction indicated by the arrow 14, similar as shown in Fig. 2, and passing the mould a cutting means 10, which may be a cutting blade, the part of the object extending the mould 4 will be removed.

Figure 4 shows the cross section of the base 3 unit of the housing 1, with the supporting pins 22 for supporting the mould 4 (not shown), the groove 7 of a similar shape as the mould 4, the vertical passage 6 and a horizontal passage 30 that is coupled to the passage 6. This is illustrated in a more detailed in Fig. 5 showing a cross sectional part of two housings 2 from Fig. 2 as well as the rotating cutting blade 10 and the plurality open channels 32 extending through the mould for transferring the under pressure in said interior to the surface of the mould. A supporting means 35, on which the plurality of housings rest 1 is shown, wherein said supporting means is mounted to the supporting frame 11 as shown in Fig. 2. An under pressure nozzle 31 extends through said supporting means 35 and is positioned adjacent to the horizontal passage 30 in a fixed position. Accordingly, as the conveyor unit is running and the plurality of housings 1 (moulds 4) are moving in a uniform motion the under pressure in each mould is maintained while the horizontal passage 30 is adjacent to the nozzle 31. If the velocity of the conveyor unit is V, and the length of the horizontal passage 30 is L, the time where the under pressure is maintained in the mould is t=V/L. A sealing 36 adapted to maintain the vacuum is preferably arranged between the housings 1 and the supporting means 35.

Figure 6 shows a side view of the conveyor unit in Fig. 2, illustrating the moving direction of the housings 1 (moulds 4), the cutting blade 10, the driving unit 16 for the conveyor unit, a vacuum pump 37, or similar means for providing under pressure, and air nozzle 31 connected to the said means for providing under pressure, the supporting means 35 for supporting said plurality of housings 1 and said chains 25.

Figure 7 shows a front view of the apparatus in Fig. 2 and Fig. 6, showing the cutting blade 10, the housing 1 and the base unit 3, the supporting means 35 and the sealing 36.

## Claims

1. A device for cutting objects into fixed portion size with a predetermined shape comprising:
• a plurality of moulds (4) mounted on a conveying means (25), wherein upper part of said conveying means forms a processing part (12), and lower half of said conveying means forms an idle part (13),
• means for feeding said processing part with objects to be processed, wherein said objects are situated in said moulds (4),
means for cutting (10) said objects into an object part (18) corresponding to the mould, and a supplementary part (19) corresponding to the part of said object extending above the mould positioned adjacent to said processing part (12), wherein the object part has a fixed portion size,
• means for providing under-pressure (37) in the mould for positioning said objects in a fixed position as they pass the cutting means (8), and
means for transferring (16) said mould in a uniform motion during the cutting process, means for removing said supplementary part of said objects mounted to said processing part of said conveyor,
wherein said objects part (18) has a fixed portion size with a predetermined shape corresponding to the shape of the mould and the supplementary part (19) corresponds to the difference between the object size and the portion size of the object.

2. A device according to claim 1, wherein the mould (4) forms an upper part of a housing (1), said housing additionally comprising a base unit (3) as a bottom part of the housing (1) with at least one passage (6) extending through it.

3. A device according to claim 1 or 2, wherein the mould may be opened and/or closed and/or is replaceable.

4. A device according to any of the preceding claims, wherein the base unit is provided with a supporting means (35) extending perpendicular from the base unit towards the upper part of the housing acting as a supporting means for the mould.

5. A device according to any of the preceding claims, wherein the cutting means (8) is a cutting blade (10).

6. A device according to any of the preceding claims, wherein the cutting blade (10) is positioned adjacent to the surface of the mould (4) and is adapted to perform a cut parallel to the surface of the mould (4).

7. A device according to any of the preceding claims, wherein the mould (4) is provided with at least one open channel (6) extending through the mould (4) and perpendicular to the surface of the mould (4) for transferring the under pressure (37) to the surface of the mould (4).

8. A device according to any of the preceding claims, wherein the mould (4) is a single unit.

9. A device according to any of the preceding claims, wherein the cutting means (8) is a rotatable cutting blade (10).

10. A device according to any of the preceding claims, wherein the means for providing under-pressure (37) is an air duct.

11. A device according to any of the preceding claims, wherein the means for providing under-pressure (37) is a vacuum pump.

12. A device according to any of the preceding claims, wherein the means for providing the under-pressure (37) is positioned between the upper-and lower section parts of the conveying means.

13. A device according to any of the preceding claims, wherein a nozzle (31) connected to the means for providing the under pressure (37) is positioned adjacent to the processing part (12) between the processing part and the idle part (13) of the conveying means (25).

14. A device according to any of the preceding claims, wherein a removing board is adapted to remove the cut part (19) of the object is mounted to the conveying means.

15. A device according to any of the preceding claims, wherein a removing means adapted to guide the removed parts of the object from the conveying unit to a location where the cut parts (19) are further processed is mounted to the conveying means.

16. A method for cutting objects into fixed portion size with a predetermined shape, said method comprising:
• situating said objects in a mould (4),
• applying under-pressure (37) in said mould for positioning said object in a fixed position as they pass the cutting means (10), and
• transferring (16) said mould in a uniform motion during the cutting process,
• cutting said object into an object part (18) and a supplementary part (19),
• remove said supplementary part (19) of said objects,
wherein said object part (18) has a fixed portion size with a predetermined shape and said supplementary part (19) corresponds to the difference between the object size and the portion size of the object.

17. A method according to claim 16, wherein the portion size corresponds to the size of the object that fills out the mould.

18. A method according to claim 16 or 17, wherein the portion shape corresponds to the shape of the mould.

19. A method according to any of the claims 16 - 18, wherein the object is a chicken breast.

20. A method according to any of the claims 16 - 19, wherein the cutting is performed parallel to the surface of the mould.

## Patentansprüche

1. Vorrichtung zum Schneiden von Gegenständen in gleiche Teile mit einer vorher festgelegten Form, umfassend:
- Mehrere Formen (4), die auf einem Fördermittel (25) angeordnet sind, wobei der obere Teil des Fördermittels einen Verarbeitungsteil (12) ausbildet und eine untere Hälfte des Fördermittels einen passiven Teil (13) ausbildet,
- Mittel zum Beschicken des Verarbeitungsteils mit zu verarbeitenden Gegenständen, wobei sich die Gegenstände in den Formen (4) befinden,
Mittel zum Schneiden (10) der Gegenstände zu einem Gegenstandsteil (18) entsprechend der Form und einem überstehenden Teil (19) entsprechend dem Teil des Gegenstandes, der sich über der Form erstreckt, die neben dem Verarbeitungsteil (12) angeordnet ist, wobei der Gegenstandsteil eine feststehende Größe aufweist,
- Mittel zum Bereitstellen eines Unterdrucks (37) in der Form zum Positionieren der Gegenstände in einer feststehenden Position, wenn sie das Schneidemittel (8) durchlaufen, und Mittel zum Befördern (16) der Form in einer gleichförmigen Bewegung während des Schneideverfahrens, Mittel zum Entfernen des überstehenden Teils der Gegenstände, die auf dem Verarbeitungsteil des Förderers angeordnet sind,
wobei der Gegenstandsteil (18) eine feststehende Größe mit einer bestimmten Form aufweist, die dem Profil der Form entspricht, und der überstehende Teil (19) dem Unterschied zwischen der Gegenstandsgröße und der Portionsgröße des Gegenstandes entspricht.

2. Vorrichtung nach Anspruch 1, wobei die Form (4) einen oberen Teil eines Gehäuses (1) ausbildet, wobei das Gehäuse zusätzlich eine Basiseinheit (3) als einen Bodenteil des Gehäuses (1) mit mindestens einem Durchgang (6) umfasst, der sich **dadurch** erstreckt.

3. Vorrichtung nach Anspruch 1 oder 2, wobei die Form geöffnet und/oder geschlossen werden kann und/oder austauschbar ist.

4. Vorrichtung nach einem der vorhergehenden Ansprüche, wobei die Basiseinheit mit einem Trägermittel (35) bereitgestellt ist, das sich senkrecht von der Basiseinheit zu dem oberen Teil des Gehäuses erstreckt, das als ein Trägermittel für die Form dient.

5. Vorrichtung nach einem der vorhergehenden Ansprüche, wobei das Schneidemittel (8) eine Schneideklinge (10) ist.

6. Vorrichtung nach einem der vorhergehenden Ansprüche, wobei die Schneideklinge (10) neben der Fläche der Form (4) angeordnet ist und einen Schnitt parallel zu der Fläche der Form (4) ausführen kann.

7. Vorrichtung nach einem der vorhergehenden Ansprüche, wobei die Form (4) mit mindestens einem offenen Kanal (6) bereitgestellt ist, der sich durch die Form (4) und senkrecht zur Fläche der Form (4) erstreckt, um den Unterdruck (37) auf die Fläche der Form (4) zu übertragen.

8. Vorrichtung nach einem der vorhergehenden Ansprüche, wobei die Form (4) eine einzige Einheit ist.

9. Vorrichtung nach einem der vorhergehenden Ansprüche, wobei das Schneidemittel (8) eine drehbare Schneideklinge (10) ist.

10. Vorrichtung nach einem der vorhergehenden Ansprüche, wobei das Mittel zum Bereitstellen von Unterdruck (37) eine Luftleitung ist.

11. Vorrichtung nach einem der vorhergehenden Ansprüche, wobei das Mittel zum Bereitstellen von Unterdruck (37) eine Vakuumpumpe ist.

12. Vorrichtung nach einem der vorhergehenden Ansprüche, wobei das Mittel zum Bereitstellen des Unterdrucks (37) zwischen dem oberen und dem unteren Abschnittsteil des Fördermittels angeordnet ist.

13. Vorrichtung nach einem der vorhergehenden Ansprüche, wobei eine Düse (31), die mit dem Mittel zum Bereitstellen des Unterdrucks (37) verbunden ist, neben dem Verarbeitungsteil (12) zwischen dem Verarbeitungsteil und dem passiven Teil (13) des Fördermittels (25) angeordnet ist.

14. Vorrichtung nach einem der vorhergehenden Ansprüche, wobei eine Abnahmeplatte, die den abgeschnittenen Teil (19) des Gegenstandes abnehmen kann, an dem Fördermittel angeordnet ist.

15. Vorrichtung nach einem der Ansprüche, wobei ein Abnahmemittel, das die abgenommenen Teile des Gegenstandes von der Fördereinheit zu einem Ort führen kann, an dem die abgeschnittenen Teile (19) weiter verarbeitet werden, an dem Fördermittel angeordnet ist.

16. Verfahren zum Schneiden von Gegenständen in gleiche Teile mit einer vorher festgelegten Form, wobei das Verfahren Folgendes umfasst:
- Anordnen der Gegenstände in einer Form (4),
- Aufbringen von Unterdruck (37) in der Form zum Anordnen des Gegenstandes in einer feststehenden Position, wenn sie das Schneidemittel (10) durchlaufen, und
- Befördern (16) der Form in einer gleichförmigen Bewegung während des Schneideverfahrens,
- Schneiden des Gegenstandes in einen Gegenstandsteil (18) und einen überstehenden Teil (19),
- Abnehmen des überstehenden Teils (19) von den Gegenständen,
wobei der Gegenstandsteil (18) eine feststehende Portionsgröße mit einer vorher festgelegten Form aufweist und der überstehende Teil (19) dem Unterschied zwischen der Gegenstandsgröße und der Portionsgröße des Gegenstandes entspricht.

17. Verfahren nach Anspruch 16, wobei die Portionsgröße der Größe des Gegenstandes entspricht, der die Form ausfüllt.

18. Verfahren nach Anspruch 16 oder 17, wobei die Portionsform den Profilen der Form entspricht.

19. Verfahren nach einem der Ansprüche 16 bis 18, wobei der Gegenstand eine Hühnerbrust ist.

20. Verfahren nach einem der Ansprüche 16 bis 19, wobei das Schneiden parallel zur Formfläche erfolgt.

## Revendications

1. Dispositif de découpe d'objets à une taille de portion fixe avec une forme prédéterminée comprenant :
- une pluralité de moules (4) montés sur un moyen de transport (25), dans lequel la partie supérieure dudit moyen de transport forme une partie de traitement (12), et la partie inférieure dudit moyen de transport forme une partie inactive (13),
- des moyens pour alimenter ladite partie de traitement avec des objets à traiter, dans lequel lesdits objets sont situés dans lesdits moules (4),
des moyens pour couper (10) lesdits objets en une partie d'objet (18) correspondant au moule, et une partie supplémentaire (19) correspondant à la partie dudit objet s'étendant au-dessus du moule positionné de manière adjacente à ladite partie de traitement (12), dans lequel la partie d'objet n'a pas une taille de portion fixe,
- des moyens de fourniture sous pression (37) dans le moule pour positionner lesdits objets à une position fixe lorsqu'ils passent par les moyens de découpage (8), et des moyens pour transférer (16) ledit moule dans un mouvement uniforme pendant le processus de découpage, des moyens pour enlever ladite partie supplémentaire desdits objets montés sur ladite partie de traitement dudit convoyeur,
dans lequel ladite partie d'objet (18) a une taille de portion fixe avec une forme prédéterminée correspondant à la forme du moule et la partie supplémentaire (19) correspond à la différence entre la taille d'objet et la taille de portion de l'objet.

2. Dispositif selon la revendication 1, dans lequel le moule (4) forme une partie supérieure d'un boîtier (1), ledit boîtier comprenant en outre une unité de base (3) en tant que partie inférieure du boîtier (1) avec au moins un passage (6) s'étendant à travers celle-ci.

3. Dispositif selon la revendication 1 ou 2, dans lequel le moule peut être ouvert et/ou fermé et/ou remplacé.

4. Dispositif selon l'une quelconque des revendications précédentes, dans lequel l'unité de base est munie d'un moyen de support (35) s'étendant perpendiculairement à l'unité de base vers la partie supérieure du boîtier agissant comme un moyen de support pour le moule.

5. Dispositif selon l'une quelconque des revendications précédentes, dans lequel les moyens de découpage (8) sont une lame de découpage (10).

6. Dispositif selon l'une quelconque des revendications précédentes, dans lequel la lame de découpage (10) est positionnée de manière adjacente à la surface du moule (4) et est adaptée pour effectuer un découpage parallèle à la surface du moule (4).

7. Dispositif selon l'une quelconque des revendications précédentes, dans lequel le moule (4) est muni d'au moins un canal ouvert (6) s'étendant à travers le moule (4) et perpendiculairement à la surface du moule (4) pour transférer la sous-pression (37) à la surface du moule (4).

8. Dispositif selon l'une quelconque des revendications précédentes, dans lequel le moule (4) est une unité unique.

9. Dispositif selon l'une quelconque des revendications précédentes, dans lequel les moyens de découpage (8) sont une lame de découpage rotative (10).

10. Dispositif selon l'une quelconque des revendications précédentes, dans lequel les moyens pour fournir la sous-pression (37) sont une conduite d'air.

11. Dispositif selon l'une quelconque des revendications précédentes, dans lequel les moyens pour fournir la sous-pression (37) sont une pompe à dépression.

12. Dispositif selon l'une quelconque des revendications précédentes, dans lequel les moyens pour fournir la sous-pression (37) sont positionnés entre les parties de section supérieure et de section inférieure des moyens de transport.

13. Dispositif selon l'une quelconque des revendications précédentes, dans lequel un gicleur (31) connecté aux moyens pour fournir la sous-pression (37) est positionné de manière adjacente à la partie de traitement (12) entre la partie de traitement et la partie inactive (13) des moyens de transport (25).

14. Dispositif selon l'une quelconque des revendications précédentes, dans lequel une plaque de dépose adaptée pour déposer la partie découpée (19) de l'objet est montée sur les moyens de transport.

15. Dispositif selon l'une quelconque des revendications précédentes, dans lequel un moyen de dépose adapté pour guider les parties déposées de l'objet de l'unité de transport à un emplacement où les parties découpées (19) sont en outre traitées est monté sur les moyens de transport.

16. Procédé de découpe d'objets à une taille de portion fixe avec une forme prédéterminée, ledit procédé comprenant les étapes consistant à :
- situer lesdits objets dans un moule (4),
- appliquer une sous-pression (37) dans ledit moule pour positionner ledit objet à une position fixe en passant par les moyens de découpage (10), et
- transférer (16) ledit moule dans un mouvement uniforme pendant le processus de découpage,
- découper ledit objet en une partie d'objet (18) et une partie supplémentaire (19),
- déposer ladite partie supplémentaire (19) desdits objets,
dans lequel ladite partie d'objet (18) a une taille de portion fixe avec une forme prédéterminée et ladite partie supplémentaire (19) correspond à la différence entre la taille d'objet et la taille de portion de l'objet.

17. Procédé selon la revendication 16, dans lequel la taille de portion correspond à la taille de l'objet qui remplit le moule.

18. Procédé selon la revendication 16 ou 17, dans lequel la forme de portion correspond à la forme du moule.

19. Procédé selon l'une quelconque des revendications 16 à 18, dans lequel l'objet est du blanc de poulet.

20. Procédé selon l'une quelconque des revendications 16 à 19, dans lequel le découpage s'effectue parallèlement à la surface du moule.
